# EUROPEAN PATENT APPLICATION

(11) **EP 3 424 596 A1**
(43) Date of publication of application: **09.01.2019**
(21) Application number: 17180015.4
(22) Date of filing: 06.07.2017
(51) Int. Cl.: B01J 37/03, B01J 21/04, B01J 35/04, B01J 37/02, B01D 53/94

(54) **METHOD FOR COATING A MONOLITH CARRIER**

(71) Applicant: UMICORE AG & CO. KG, 63457 Hanau-Wolfgang (DE)
(72) Inventor: HASSELMANN, Wolfgang, 79618 Rheinfelden (DE)

(57) **Abstract**

The present invention is directed to a process for coating an automotive exhaust catalyst. In particular, the present invention opens the path to coating several layers of washcoat onto each other without an intermediate drying step.

## Description

The present invention is directed to a process for coating an automotive exhaust catalyst. In particular, the present invention opens the path to coating several layers of washcoat onto each other without an intermediate drying step.

It is well known in the field of combustion engines that fuel combustion is not complete and yields emissions of pollutants like unburned hydrocarbons (HC), carbon monoxide (CO), nitrogen oxides (NOₓ) and particulate matter (PM). In order to improve air quality, emission limit legislations are in place to achieve lower emissions of pollutants from stationary applications as well as from mobile sources. For mobile sources like passenger cars, already primary measures enabled achieving a decrease in the emission of pollutants. E.g., improvement of fuel-air mixing as primary measure yielded considerable diminution of pollutants. However, due to more stringent legislations which have been introduced over the years the use of heterogeneous catalysts as secondary measures has become inevitable.

An important aspect of producing these heterogeneous catalysts is the precise coating of substrates with a washcoat used in view of, e.g. coating length, coating quantity applied, evenness of coating layer, uniformity of coating length and coating gradients along the longitudinal axis as well as the manufacture of layered or zoned coating designs. In order to achieve this, up to now several coating strategies have been employed that try to provide well-coated monolithic bodies, advantageously in as few time as possible.

Normally such monolith bodies (substrates) or carriers are made out of e.g. metal or cordierite having a plurality of inner channels through which the exhaust gas is made to flow. These are to be coated with a layer being active in catalytically destroying the noxious pollutants in the exhaust under driving conditions, i.e. the washcoat. A great improvement has been achieved by chemically modifying the catalytically active layers with respect to the main reactions of the pollutants under oxidative or reductive exhaust environment. A second approach is to apply certain coating strategies in order to gain an activity as high as possible with the material at hand. Hence, several patent applications already deal with standard processes and devices/tools to coat said monolithic carriers. E.g., the following selection of patent publications, respectively, highlight aspects of such processes, like coating apparatus, methods for coating, or special units of a coating station (WO9947260A1; US4550034; US4039482; WO9748500A1; US6478874B1; US20020178707A1; DE19781838T1; WO2011080525A1; US4191126; US6627257B1; US6548105B2; US20080107806A1; US6149973; US6753294B1).

A further strategy to improve the conversion of noxious exhaust gas compounds into less harmful substances is realized by applying different catalytic functionalities into the exhaust trains of such combustion engines. However, where space is limit this poses a problem and multiple investigations have already led towards catalysts that incorporate several catalytic functionalities into one substrate. As such, these functionalities are applied to the substrates in a zoned and/or layered format (US8906330B2). Especially, for establishing layered catalytic functionalities certain requirements are necessary which somehow slow down the production process.

E.g., when coating a second washcoat onto a first washcoat in order to achieve a so-called layered washcoat design, to date the first washcoat has to be dried by applying heat and e.g. a stream of air to the coated carrier. This necessitates stopping the coating process, removing the coated carrier from the coating device, drying it for a considerable amount of time and finally introducing the carrier again into the coating device to continue with the second washcoat coating step as e.g. in US3959520. This creates a great complexity with regard to handling the carriers to be coated. Furthermore, the interim drying increases the energy consumption and cycle time for each monolith carrier/substrate, both of which, however, are crucial parameters to keep production costs low.

In CA1054462 a method is disclosed in which a liquid alumina containing washcoat is rendered into a thixotropic gel after coating it on a monolith carrier by conveying ammonia through the passageways of the monolith. The thus formed coating somehow helps to create more uniform washcoat layers on the substrate carrier.

The objective of the present invention is, therefore, to create a process, which is less complex, and time, and energy consuming, hence, which is favorable from an ecological and economical perspective. This objective is reached by applying a process as claimed in present claim 1. Further preferred embodiments are depicted in claims 2 - 11 depending on claim 1.

By using a method for performing a coating process of monolith carriers for automotive exhaust treatment, the carriers being cylindrical support bodies and each have two end faces, a circumferential surface and an axial length L and are traversed from the first end face to the second end face by a multiplicity of channels,
comprising the steps of:
a. vertically providing a carrier in a coating unit;
b. coating a first washcoat that hardens under the influence of an acid or a base treatment onto or into the channel walls of the carrier;
c. submitting an acidic or a basic liquid or gaseous stream through the channels of the carrier;
d. without drying the carrier supplying a second washcoat
   at least partially onto the first washcoat;
e. subjecting the carrier to drying and optionally calcination,
a streamlined process is established, which allows for the production of automotive exhaust catalyst in a very advantageous but nevertheless non-obvious manner. The present inventive process is superior to the processes known in the prior art at least from an ecological as well as economical perspective. In fact, the present process provides for a less complex and less time and energy consuming production of such catalysts.

The coating unit used according to the invention can be any of those known to the skilled worker as long as the present process can be realized with it. It is preferred, however, to use coating units as described e.g. in WO2011098450A1 or WO2010114132A1. The coating units described herein have a holding unit for holding the carrier in a vertical direction. From below or from the top the first washcoat slurry can be introduced into the monolith carrier sitting in the holding unit. The first washcoat is introduced under conditions that are predetermined to form a first washcoat layer in wet state along a length of the channels that is up to but preferably less than 100% of the total length of the monolith carrier; more preferably a length equal to or greater than about 85% and less than 97%; and yet more preferably a length equal to or greater than about 90% and equal to or less than about 95%, although any length less than 100% may be desirable based on application. Targeting less than 100% of the total length of the carrier also provides further benefits including, though not limited to, mitigating the unintended spillover of washcoat slurry through the opposite end face of the carrier; and suppressing particle size and compositional drift issues (e.g., formation of a gradient), thereby promoting a uniform application of the applied washcoat layer.

Afterwards from below or from the top of the carrier monolith a stream of a respective acidic or basic gas or a liquid can be conveyed through the channels of the monolith carrier. On reaction of the acidic or basic gaseous or liquid stream with the washcoat, the latter hardens and solidifies to the necessary extent that it is ready to be overcoated by the same or a different second washcoat without prior drying it, which means that the monolith carrier is not removed from the holding unit for the purpose of removing liquid components from the applied washcoat by a heat and air-flow treatment (i.e. normal drying process) of the carrier to increase its viscosity. As an example, in the figures it is shown how an alumina containing washcoat can harden or solidify by simply conveying a stream of gaseous ammonia over it. In such a format, a second washcoat can be applied over the first one without any mixing or unwanted diffusional effects between both washcoats. Afterwards the monolith carrier thus coated can be dried and optionally calcined.

In a further advantageous alternative it is possible that the monolith carrier already coated with the first washcoat can be switched around for 180° before or after reaction with the acidic or basic liquid or gaseous stream, i.e. between steps b. and c. or steps c. and d. As such, the monolith carrier can be coated with the second washcoat from the other end face using the same equipment as with the first washcoat. Needless to say that the introduction of the second washcoat can be done from the same side also if turning around of the monolith carrier is omitted. The second washcoat can be applied in the same manner like the first washcoat. The second washcoat can also be introduced into the channels of the monolith carrier from below with or without turning the carrier, e.g. by using a method as depicted in WO2011098450A1. The top-coating equipment as displayed in WO2010114132A1 can thus be combine with the bottom-coating equipment as used in WO2011098450A1 within one coating unit. Preferably, when turning around the monolith carrier this can be done with means known to the skilled worker, like robot arms etc. or even manually.

Again, the second washcoat can be introduced as a slurry under conditions that are predetermined to form a second washcoat layer at least partially over the first washcoat in wet state (i.e., at least 50% of the water content still being present) and along a length of the channels that is up to but preferably less than 100% of the total length of the monolith carrier; more preferably a length equal to or greater than about 85% and less than 97%; and yet more preferably a length equal to or greater than about 90% and equal to or less than about 95%, although any length less than 100% may be desirable based on application. Targeting less than 100% of the total length of the carrier also provides further benefits including, though not limited to, mitigating the unintended spillover of washcoat slurry through the opposite end face of the substrate; and suppressing particle size and compositional drift issues (e.g., formation of a gradient), thereby promoting a uniform application of the applied catalyst layer.

While the present invention also allows to coat the respective monolith carrier with the same washcoat, thus generating consecutively lying layers of the same washcoat composition onto each other, in a preferred embodiment the second washcoat is different from the first washcoat. Modern catalyst designs more and more call for complex architectures with regard to washcoat layers of different compositions comprising different functionalities. Today zoned arrangements of washcoat layers which have two or three different compositions onto each other are quite frequently applied in real-life applications (US8906330B2). Hence, in a very preferred alternative of the present invention a monolith carrier can be coated over the full or less than the full length L with a first washcoat and treated according to the present invention with an acidic or basic gaseous or liquid stream. Next a second washcoat is coated at least partially over the same zone or region like the first washcoat followed by the treatment according to the present invention with an acidic or basic gaseous or liquid stream. Subsequently, the monolith carrier can be turned around by 180° and be coated from the other side with a third washcoat being the same or different to the first and/or second washcoat over all or the reminder of the length L of the monolith carrier which has not been coated so far with the first and/or second washcoat (see US20030044520A1 and US20010024686A1 for establishing zone coatings). Other layouts are conceivable by the skilled worker and are compatible with the present invention.

Again, the acidic or basic gaseous or liquid treatment will lead to the solidification of the just coated washcoat, i.e. the first, second and optionally the third one. If so desired a fourth washcoat being the same or different to the first to third washcoat can then be coated at least partially onto the third washcoat and so forth. It is clear from the above said that in each case where a washcoat layer is at least partially coated over another washcoat layer an intermediate treatment with the acidic or basic gas or liquid has to occur in order to harden and solidify the underlying washcoat to the necessary extent, and thus inhibit mixing of the two washcoat layers laying onto each other after coating. Hence, in a further preferred alternative of the present invention steps c. and d. are repeated each time a further washcoat has to be applied over a yet not solidified or not hardened one, optionally by applying washcoats different to the previous washcoat and optionally by intermediate turning of the monolith carrier by 180° in the holding unit.

In a very preferred embodiment it is possible to use the second washcoat as the acidic or basic liquid. Sometimes different washcoats have different pH-values. Hence, if one is to apply e.g. a first basic washcoat that hardens under acidic treatment the solidification process can be initiated just by applying over the still wet first washcoat an acidic second washcoat. In this embodiment the steps c. and d. of the present invention become one step. As an example, SCR-types of washcoats may be rather basic in nature while precious metal containing washcoats are quite acidic.

In order to solidify or harden a coated washcoat on a monolith carrier according to the procedure of the present invention the applied washcoat has to have the ability to become pseudoplastic upon treatment with a liquid or gaseous acid or base. Though theoretical considerations have also been carried out regarding the behavior of metal oxide suspensions on pH-treatment (Tombácz et al., Progr. Colloid Polym. Sci (1995), 98, 160 - 168; Zhou et al., Chemical Engineering Science (2001), 56, 2901 - 2920), due to the fact that the washcoat slurries which are coated on such monolith carriers, are complex mixtures of several components some tweaks (solid/liquid ratio, temperature, additives, etc.) may be needed to generate a washcoat will in fact show this pseudoplastic behavior. However, this can be checked by the skilled worker in preliminary trials as depicted in the examples and the attached figures.

In addition, one can stimulate the effect of pseudoplastic behavior upon acidic or basic treatment by adding certain compounds to the washcoat to be supplied to the monolith carrier. As such, compounds like depicted in WO2016023808A, US9144796B1 and literature cited therein for intensifying a pseudoplastic behavior of a washcoat can be taken (rheology modifiers). Furthermore, the list of the following compounds can render the washcoat even more susceptible for such pseudoplastic behavior. Rheological aids for setting a pseudoplastic behavior have long been known. An overview of useful rheology modifiers can be found in the publication of D. Brown and M. Rosen (The Rheology Modifier Handbook Author: David B. Brown and Meyer R. Rosen ISBN 0-8155-1441-7 Published: 1999).

A first set of compounds that may provide suitable rheology modifiers are linear or branched-chain poly-functionalized organic molecules having two or more carbon atoms in the chain, with up to about 12 carbon atoms (Cn; wherein 2 ≤ n ≤ 12). The carbon backbone may be saturated or unsaturated in either the cis- or trans- configuration. The organic molecule is functionalized with at least one carboxylic acid moiety, and at least one additional functional moiety from the following list: carboxyl, hydroxyl, or carbonyl. The number of functional moieties can range from 2 to n preferably. Preferred are those having the structure of dicarbonic acid, like eg. oxalic acid, tartaric acid, succinic acid, glutaric acid etc.

A second set of compounds that may provide suitable rheology modifiers are based on salts of basic quaternary amines. Here one or more quaternary amine groups are attached to four carbon chains having length of Cn, where 1≤ n ≤ 5. This cation is balanced as a salt using, but not limited to, one of the following anions: hydroxide, fluoride, chloride, bromide, iodide, carbonate, sulfate, sulfite, oxalate, maleate, phosphate, aluminate, silicate, borate, or other suitable organic or inorganic counter ions.

A third set of compounds that may provide suitable rheology modifiers includes inorganic bases taken from, but not limited to the following list: lithium hydroxide, sodium hydroxide, potassium hydroxide, magnesium hydroxide, calcium hydroxide, strontium hydroxide, and barium hydroxide.

A fourth set of compounds that may provide suitable rheology modifiers includes simple salts of transition or rare earth elements, including, but not limited to the following: nitrates, carbonates, sulfates, phosphates, borates of rare earth elements from atomic number 57 (La) to 71 (Lu) and including Sc, Y, Ti, Zr, and Hf.

The rheological properties of the various catalyst slurries may be adjusted by providing the washcoat of the respective catalyst slurries with any appropriate combination of the above referenced compounds, including combinations of compounds in a common set (e.g., two or more compounds from the second set) and combinations of compounds from different sets (e.g., one compound from the first set; and two compound from the third set).

The rheology modifiers are added in weight percent concentrations of 0.01% up to 10%, preferably from about 0.1% to about 7.5%; and more preferably from about 0.1% to about 5%. The predetermined initial viscosities of the separate catalyst slurries, and the differences between the respective initial viscosities, may be adjusted by selecting different rheology modifiers (or combinations thereof) and/or adjusting the weight percent of the one or more rheology modifiers for each catalyst slurry.

The acidic liquid or the acidic gaseous stream which is to be submitted to the monolith carrier after a washcoat has been coated on or in its channel walls can be selected by the skilled worker based on feasibility, cost and safety considerations. In a preferred embodiment the acidic component of the liquid or the gaseous stream is selected from the group of C₁-C₄-branched or unbranched, saturated or unsaturated organic acid, and inorganic acid, such as HNO₃, HCl, H₂SO₄, H₃PO₄. The compounds can preferably be applied as a gas, an aqueous solution or as an aerosol or in a steam format. Within the group of organic acids formic acid, acetic acid or propionic acid, preferably as an aqueous solution or as an aerosol or in a steam format are particularly advantageous.

The basic liquid or the basic gaseous stream which is to be submitted to the monolith carrier after a washcoat has been coated on or in its channel walls can be selected by the skilled worker based on feasibility, cost and safety considerations. In a preferred embodiment the basic component of the liquid or the gaseous stream is selected from the group of ammonia, CO₂, alkaline and alkaline earth hydroxides, alkaline salt of a C₁-C₄-branched or unbranched, saturated or unsaturated organic acid as depicted above. The compounds can preferably be applied as a gas, an aqueous solution or as an aerosol or in a steam format. Within the group of organic acids formic acid, acetic acid or propionic acid. The latter are preferably applied as an aqueous solution or as an aerosol or in a steam format, while basic gases are advantageously applied in the gas form.

As such the acidic or basic component cited above is applied to the washcoat on or in the walls of the monolith carrier in form of a liquid medium or a gaseous stream. When talking about a gaseous stream, this can be a pure gas, an aerosol, or a stream in a steam format. The skilled worker knows how to produce such streams (https://en.wikipedia.org/wiki/Aerosol; https://en.wikipedia.org/wiki/Steam). The liquid medium most preferably is a solution of the respective component in water. Its concentration is not that critical. It has to be enough of the component in the liquid medium to produce the necessary effect though. The skilled worker can handle this.

Preferably, the carrier coated according to the present invention is a flow-through or a wall-flow monolith. Suitable substrates that can be employed in the present invention are monolithic substrates of the type having fine, parallel gas flow passages extending there through from an inlet or an outlet face of the substrate, such that passages are open to fluid flow there through, named honeycomb flow-through substrates. The passages, which are essentially straight paths from their fluid inlet to their fluid outlet, are defined by walls on which or in which the catalytic material is coated as a washcoat so that the gases flowing through the passages contact the catalytic material. The flow passages of the monolithic substrate are thin-walled channels, which can be of any suitable cross-sectional shape and size such as trapezoidal, rectangular, square, sinusoidal, hexagonal, oval, circular, etc. Such structures may contain from about 400 - 900 or more gas inlet openings (i.e., cells) per square inch of cross section (62 - 140 cells/cm²). The wall thicknesses, i.e. the thickness of the walls which separate the channels of the substrate from one another, are usually from about 0.005 cm to about 0.25 cm.

The substrate to be coated according to the invention may preferably also be a honeycomb wall-flow filter. Wall-flow substrates useful for supporting the coating compositions have a plurality of fine, substantially parallel gas flow passages extending along the longitudinal axis of the substrate. Typically, each passage is blocked at one end of the substrate body, with alternate passages blocked at opposite end-faces. Specific wall-flow substrates for use in the inventive process include thin porous walled honeycombs (monoliths) through which the fluid stream passes without causing too great an increase in back pressure or pressure drop across the article. Normally, the presence of a clean wall-flow article will create a back pressure of 0.036 psi to less than 10 psi.

The above mentioned substrates are preferably metal or ceramic-like monoliths, the latter are made out of any suitable refractory material, e.g., cordierite, cordierite-alumina, silicon nitride, zircon mullite, spodumene, alumina-silica magnesia, zircon silicate, sillimanite, a magnesium silicate, zircon, petalite, alumina, an aluminosilicate and the like. In view of flow-through monoliths, which are suitable for the production of exhaust gas catalysts for motor vehicles according to the present process, they preferably have a porosity of more than 20%, generally from 20% to 55%, in particular from 22% to 50% prior to coating [measured according to DIN 66133 as of the application date]. The mean pore size is at least 1 µm, e.g. from 1.5 µm to 15 µm, preferably more than 3 µm, in particular from 5 µm to 9 µm or from 10 µm to 15 µm prior to coating [measured according to DIN 66134 as of the application date]. Finished substrates suitable for the exhaust gas catalysis of motor vehicles which originally have a mean pore size of 5 to 15 µm and a porosity of 25% to 40% are particularly advantageous. In view of ceramic wall-flow filter substrates, which are suitable for the production of exhaust gas filters for motor vehicles according to the present process, they preferably have a porosity of more than 40%, generally from 40% to 75%, in particular from 45% to 70% [measured according to DIN 66133 as of the application date]. The mean pore size is at least 7 µm, e.g. from 7 µm to 34 µm, preferably more than 10 µm, in particular from 10 µm to 20 µm or from 21 µm to 33 µm [measured according to DIN 66134 as of the application date]. Finished substrates suitable for the production of exhaust gas filters for motor vehicles which originally have a mean pore size of 10 to 33 µm and a porosity of 50% to 65% are particularly advantageous.

When substrates with the aforementioned porosities and mean pore sizes are coated with a washcoat, adequate levels of the coating compositions can be loaded onto and/or into the pores of the substrates to achieve excellent pollutant conversion efficiency and, in view of filters, burning off of soot. These substrates are still able to retain adequate exhaust flow characteristics, i.e., acceptable back pressures, despite the catalyst loading.

This instant process advantageously uses the techniques of e.g. the apparatus of WO2010114132A1 WO2011098450A1 and WO2015140630A1 in connection with the concept of the present invention. Surprisingly it is possible to coat a substrate with several liquid coating slurries without an intermediate drying step. By doing this a substrate monolith can be coated with the same or different coating slurries to achieve a zoned or layered concept with regard to the coatings on the substrate monoliths in a minimum of time and with less complexity of the coating process as just described.

In an advantageous coating process according to the invention a monolith carrier is provided vertically in a holding unit e.g. of an apparatus according to WO2010114132A1 or WO2011098450A1. From below or from the top of the carrier the treatment according to the invention takes place, either with or without turning around the carrier between two coating steps.

Preferably, prior to introduction into the substrate, the first washcoat slurry is delivered to a containment vessel that is adapted for fluid-flow communication with the substrate. When introduced through the bottom end face, the containment vessel may be a tank on which the substrate is releasably mountable; and when introduced through the top end face, the containment vessel may be an annular wall that is releasably mountable to the top end of the substrate. Once received in the containment vessel, and prior to introduction into the substrate, the first catalyst slurry is preferably distributed and uniformly leveled by application of a shearing force, such as by inducing a vibration (and hence some shear forces) in the first catalyst slurry and/or the containment vessel (e.g. like WO07007370A1) as a whole (e.g., a mechanized vibration; mechanical flattening, application of ultrasound energy, use of centrifugal force, leveling by air jets; etc.). Leveling of the catalyst slurry in the containment vessel promotes an even surface of the washcoat and thus an even introduction of the catalyst slurry along the channel walls of the substrate, and, finally, the formation of a uniform catalyst layer within the carrier. Hence, in a very preferred aspect of the present invention the present method comprises a step wherein the coating unit comprises a containment vessel and a leveling unit which is able to level or equalize the surface of washcoat applied to the containment vessel before the unit to introduce the washcoat into the carrier becomes active. The leveling is preferably working in a modus where the applied shear forces impact on the washcoat in the containment vessel via a contactless route, e.g. by ultra- or infrasound or a simple stream of air onto the surface of the washcoat, e.g. provided by a certain air-blowing nozzle.

When the washcoat submitted to the monolith carrier is introduced from below in a preferable aspect the coating unit comprises a first means for reversibly holding and fixing a catalyst monolith carrier to be coated with a washcoat vertically, and a second means to control the inflow of the washcoat into the monolith from below, wherein said second means is attached to said first means such that during the coating process said second means comes into contact with the washcoat before it reaches the monolith. Said second means has the form of a plate comprising holes having, when in use, an inlet side towards the washcoat and an outlet side towards the monolith, and channels providing a communication from the inlet side to the outlet side for the washcoat to flow through, wherein at least part of said channels have an asymmetric channel width along their axis being wider at the washcoat inlet side than at a point within the channels, and said asymmetric holes are wider at the washcoat outlet side than at a point within the channels, and the area which is narrower than outlet and inlet of the holes, is at least for some of the holes aligned more closely to the outlet than to the inlet side. This plate somehow works like a diffusor helping to introduce the washcoat more evenly into the monolith carrier as depicted in WO2015140630A1.

If the washcoat is submitted to the monolith carrier from the top the coating unit comprises a first means for reversibly holding and fixing a catalyst monolith carrier to be coated with a washcoat vertically, and a second means to control the flow of the washcoat onto the monolith from above, wherein said second means comprises a dosing unit for supplying the liquid coating slurry onto the top end face of the monolith carrier and wherein said dosing unit comprises a diffusor in the form of a flexible membrane through which the liquid coating slurry is applied to an area of the top end face of the monolith carrier when applying a pressure to the liquid coating slurry.

When the dosing unit for dosing the liquid coating slurry (washcoat) onto the top end face of the monolith carrier to be coated comprises a diffusor in the form of a flexible membrane through which the liquid coating slurry is subjected to the top end face or at least an area of this top end face of the support body a more evenly distribution of the washcoat on the top end face of the monolith carrier is achieved. The membrane advantageously is made out of a flexible material which is perforated by holes that open, when a force other than a gravimetric force is acting on the washcoat residing on the membrane. Hence, the membrane needs to have a certain flexibility. As said the flexibility is needed due to the fact that it should be preferably substantially closed for the washcoat to run through while only gravimetric forces are apply but should be open to the washcoat when a certain additional pressure is imposed on the washcoat thus being pressed through the membrane. In a preferred manner, the membrane with e.g. a shore hardness of 50 ShA (shore A) on a rigid support plate with a 10 mm holes has a flexibility that the diameter of the holes of the membrane increase for a factor of at least 1.2, more preferred at least 1.4, and most preferred at least about 1.5 - 1.7 (e.g. from ∅ 1mm to 1.6mm) by applying a pressure of >0 - 6 bar, preferably 2 - 5 bar and most preferably 3 - 4 bar to the washcoat slurry lying on the membrane. Utmost preferred is a situation where the diameter increases by a factor of 1.5 - 1.7 upon applying a pressure to the washcoat of from 3 - 4 bar while having washcoat viscosity of from 0,1 - 100 Pa * s (Viscosities are measured according to DIN EN ISO 3104:1999-12 as of the filing day).

Advantageously, the membrane is stabilized by a support being a rigid, non-flexible perforated plate or grid that is preferably supporting the membrane from below in view of the flow of the washcoat. Membrane and its support can form a composite. This support has openings, e.g. through holes, at the place where the membrane allows the washcoat to be supplied to the top of the substrate. The supporting plate or grid is preferably made out of hard plastics, ceramics, or stainless steel material and has a sufficient high stiffness. The stiffness of the plate is such that the plate under the pressure applied during operation deforms only up to 1 mm. The thinner the plate the better. Hence, steel is preferably used as a support plate here. In an advantageous manner the rigid, non-flexible plate or grid has through holes larger than the openings of the membrane under pressure. Ideally, the supporting plate or grid does not come into contact with the washcoat when it is supplied to the monolith carrier.

When speaking of a holding unit, this can be any holding unit known to the skilled worker for fixing the support bodies in the coating station prior to applying the liquid coating slurry. Normally, these are round or ellipsoidal tools being rigidly fixed to the coating station which have on their inner side an inflatable bellow (US4609563), the latter being inflated after the support body has been introduced into the holding unit thereby clamping it in a vertical position and building an almost airtight connection to it. These holding units have been described already frequently in the above referenced literature. In a preferred manner this holding unit is arranged in a rotatory turntable device like indicated in EP231048B1 and literature cited therein. Here the support body to be coated is delivered to the turntable and to the holding unit manually or via automatic means such as robot arms or the like.

The expression "coating" is to be understood to mean the application of catalytically active materials and/or storage components on a substantially inert substrate which may be constructed in the manner of an above-described wall-flow filter or flow-through monolith. The coating performs the actual catalytic function and contains storage materials and/or catalytically active metals which are usually deposited in highly dispersed form on temperature-stable, large-surface-area metal oxides (see below). The coating is carried out usually by means of the application of a liquid coating medium of the storage materials and/or catalytically active components - also referred to as a washcoat - onto and/or into the wall of the inert substrate. After the application of the liquid coating medium, the support is dried and if appropriate calcined at elevated temperatures. The coating may be composed of one layer or constructed from a plurality of layers which are applied to a substrate one above the other (in multi-layer form) and/or offset with respect to one another (in zones).

The liquid coating medium/slurry is, for example, a suspension or dispersion ("washcoat") for coating exhaust gas catalysts (flow-through monoliths or filters) for motor vehicles which contains the storage materials and/or catalytically active materials or precursors thereof and/or inorganic oxides such as zeolites, like CHA, LEV or similar 8-ring zeolites, or refractory oxides like aluminum oxide, titanium dioxide, zirconium oxide or a combination thereof, it being possible for the refractory oxides to be doped with silicon or lanthanum, for example. The zeolites can be exchanged with metal cations like Fe and/or Cu. Oxides of vanadium, chromium, manganese, iron, cobalt, copper, zinc, nickel or rare earth metals such as lanthanum, cerium, praseodymium, neodymium, promethium, samarium, europium, gadolinium, terbium, dysprosium, holmium, erbium, thulium, ytterbium or combinations thereof can be used as catalytically active components. Noble metals such as platinum, palladium, gold, rhodium, iridium, osmium, ruthenium and combinations thereof can also be used as catalytically active components. These metals can also be present as alloys with one another or with other metals or as oxides. The metals can also be present as precursors, such as nitrates, sulfites or organyls of said noble metals and mixtures thereof, and, in particular, palladium nitrate, palladium sulfite, platinum nitrate, platinum sulfite or Pt(NH₃)₄(NO₃)₂ can be used in the liquid coating medium. By calcination at about 400°C to about 700°C, the catalytically active component can then be obtained from the precursor. To coat a substrate for the production of automotive exhaust gas catalysts, a suspension or dispersion of an inorganic oxide can initially be used for coating, after which, in a subsequent coating step, a suspension or dispersion which contains one or more catalytically active components can be applied. However, it is also possible for the liquid coating medium to contain both of these components. The liquid coating medium often has a solids content of between 35% and 52% and a viscosity of 9.5 cP - 50 cP, preferably 25 cP - 45 cP at 20°C (Viscosity. DIN EN ISO 3104:1999-12 as of the filing day).

### Examples:

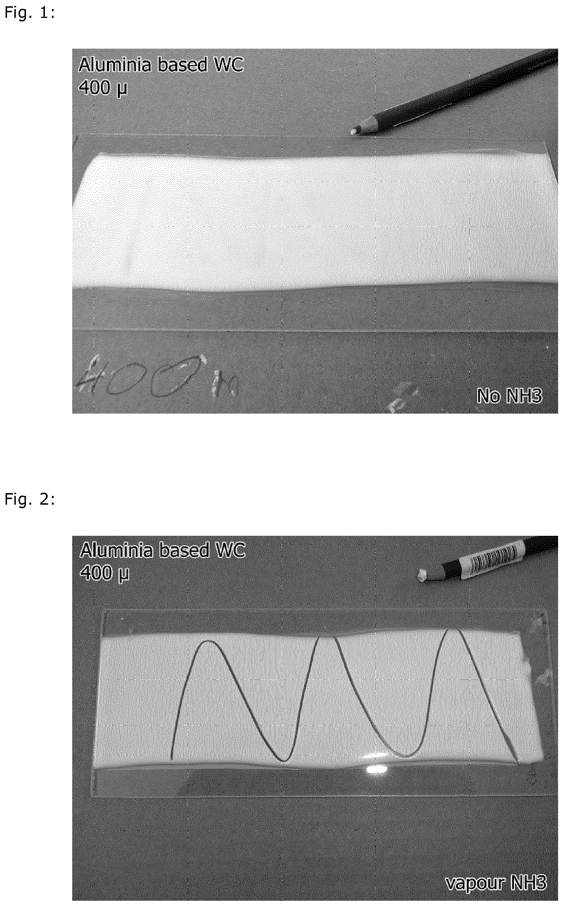

Fig. 1: Shows an alumina bases washcoat slurry rolled-out on a glass plate. The slurry concentration is around 40% in water. The slurry is applied with a film applicator with a thickness of 150 micrometer onto the glass plate. Making scratches into the surface is not possible as the washcoat closes the gap immediately due being like a liquid.
Fig. 2: Shows the same washcoat on a glass plate like in Fig. 1. Here the washcoat after rolling it out on the glass plate has been subjected to a basic ammonia gas stream that has been blown over its surface. The ammonia gas stream has been taken out of a bottle with an ammonia solution of 15% concentration. The scratches remain after treatment with a pencil like according to Fig. 1 indicating that the liquid has been solidified to a great extent such that a second layer of washcoat can be coated over this pasty bottom layer.

## Claims

1. Method for performing a coating process of monolith carriers for automotive exhaust treatment, the carriers being cylindrical support bodies and each have two end faces, a circumferential surface and an axial length L and are traversed from the first end face to the second end face by a multiplicity of channels,
comprising the steps of:
a. vertically providing a carrier in a coating unit;
b. coating a first washcoat that hardens under the influence of an acid or a base treatment onto or into the channel walls of the carrier;
c. submitting an acidic or a basic liquid or gaseous stream through the channels of the carrier;
d. without drying the carrier supplying a second washcoat at least partially onto the first washcoat;
e. subjecting the carrier to drying and optionally calcination.

2. Method according to claim 1,
wherein the carrier is turned for 180° between steps b. and c. or steps c. and d.

3. Method according to claim 1 and/or 2,
wherein the second washcoat is different from the first washcoat.

4. Method according to one of claims 1 - 3,
wherein the acidic of basic liquid is the second washcoat.

5. Method according to one of claims 1 - 4,
wherein steps c. and d. are repeated, optionally by applying washcoats different to the first and/or the second and/or further washcoats.

6. Method according to one of claims 1 - 5,
wherein the acidic component of the liquid or the gaseous stream is selected from the group of C₁-C₄-branched or unbranched, saturated or unsaturated organic acid, and inorganic acid, such as HNO₃, HCl, H₂SO₄, H₃PO₄.

7. Method according to one of claims 1 - 6,
wherein the basic component of the liquid or gaseous stream is selected from the group of ammonia, CO₂, alkaline or alkaline earth hydroxides, alkaline salt of a C₁-C₄-branched or unbranched, saturated or unsaturated organic acid.

8. Method according to one of claims 1 - 7,
wherein the carrier is a flow-through or a wall-flow monolith.
